# EUROPÄISCHE PATENTSCHRIFT

(11) **EP 1 027 186 B1**
(45) Veröffentlichungstag und Bekanntmachung des Hinweises auf die Patenterteilung: **02.10.2002**
(21) Anmeldenummer: 97954948.2
(22) Anmeldetag: 23.12.1997
(51) Int. Cl.: B23B 5/10

(54) **WERKZEUG ZUR FEINBEARBEITUNG VON BOHRUNGSOBERFLÄCHEN**
TOOL FOR FINE MACHINING BORING SURFACES
OUTIL POUR L'USINAGE FIN DE SURFACES D'ALESAGES

(30) Priorität: 24.12.1996 DE 19654421
(43) Veröffentlichungstag der Anmeldung: 16.08.2000
(73) Patentinhaber: MAPAL Fabrik für Präzisionswerkzeuge Dr. Kress KG, D-73431 Aalen (DE)
(72) Erfinder: Kress, Dieter, 73431 Aalen (DE); Häberle, Friedrich, 73466 Lauchheim (DE)
(74) Vertreter: Gleiss, Alf-Olav, Dr.jur. Dipl.-Ing.
(86) Internationale Anmeldenummer: EP9707270
(87) Internationale Veröffentlichungsnummer: WO98028099

(56) Entgegenhaltungen:
- WO-A-88/08767
- DE-C- 4 034 345
- US-A- 3 987 524

## Beschreibung

Die Erfindung betrifft eine Messerplatte für ein Werkzeug zur spanabhebenden Feinbearbeitung von Bohrungsoberflächen in Werkstücken, gemäß Oberbegriff des Anspruchs 1, und ein Werkzeug gemäß Oberbegriff des Anspruchs 15.

Messerplatten und Werkzeuge der hier angesprochenen Art sind bekannt. Die Messerplatte(n) werden mit Hilfe mindestens einer Spannpratze im Grundkörper des Werkzeugs gehalten, wobei eine Spannlippe der Spannpratze mit einer Spannfläche zusammenwirkt, die vorzugsweise auf der sogenannten Messerbrust angeordnet ist, das heißt auf der Vorderseite der Messerplatte. Es hat sich herausgestellt, daß insbesondere bei hohen Bearbeitungsgeschwindigkeiten von 6000 U/min und mehr ein sicherer Halt der Messerplatte nicht mehr gewährleistet werden kann. Dies führt zu einer Gefährdung umstehender Personen und Maschinen, da eine sich lösende Messerplatte zu Verletzungen beziehungsweise Beschädigungen führen kann.

Aus der WO 88/08767 geht eine gattungsgemäße Messerplatte für Werkzeuge zur spanabhebenden Bearbeitung von Bohrungsoberflächen in Werkstücken hervor, die eine schräg abfallende Spannfläche aufweist.

Diese ist so in die Messerplatte eingebracht, daß sie unter einem spitzen Winkel zur Mittellängsachse der Messerplatte verläuft. Dadurch sollen sowohl Spannkräfte aufgebaut werden, die die Messerplatte gegen Anschläge im Werkzeug drängen, als auch zumindest eine Kraftkomponente, die entgegen der Fliehkraft des rotierenden Werkzeugs wirkt. Nachteilig bei der bekannten Messerplatte ist, daß die Spannfläche nur auf einer Kante liegt, so daß häufig ein Flattern und Vibrationen gegeben sind.

Es ist Aufgabe der Erfindung, eine Messerplatte der eingangs genannten Art zu schaffen, die einfach und dennoch sicher mittels einer Spannpratze am Werkzeug gehalten werden kann.

Zur Lösung der Aufgabe wird eine Messerplatte vorgeschlagen, die die in Anspruch 1 genannten Merkmale aufweist. Die Messerplatte zeichnet sich dadurch aus, daß die Spannfläche -in Draufsicht gesehen- im wesentlichen dreieckförmig ausgebildet ist, daß die Spannfläche eine Begrenzungskante aufweist, die im wesentlichen parallel zu einer Seitenkante der Messerplatte verläuft, und daß die Spannfläche ausgehend von der Begrenzungskante in Richtung zur Mittellängsachse der Messerplatte ansteigt. Insbesondere dadurch, daß die Spannfläche -in Draufsicht gesehen- im wesentlichen dreieckförmig ausgebildet und gegenüber der Längsmittelachse geneigt ist, wird zwischen Messerplatte und Spannpratze quasi ein Keilgetriebe realisiert. Das heißt, die Spannpratze wird beim Spannen der Messerplatte in Richtung einer Ecke der dreieckförmigen Spannfläche gedrängt, wodurch die Anpassung der Spannlippe an die Spannfläche automatisch erfolgt. Dabei wird die Messerplatte auch zwangsläufig an am Werkzeug vorgesehene Anschläge gedrängt. Mithin kann auf eine besonders hohe Maßhaltigkeit der Spannfläche und der Spannlippe verzichtet werden, wobei dennoch die Messerplatte sicher im Werkzeug gehalten wird und durch die unter einem Winkel zur Mittellängsachse der Messerplatte verlaufende Spannfläche außerdem Spannkräfte aufgebracht werden, die entgegen der Fliehkraft des rotierenden Werkzeugs wirken.

Bevorzugt wird eine Ausführungsform der Messerplatte, die sich dadurch auszeichnet, daß diese als Wendeplatte ausgebildet ist und zwei Spannflächen aufweist, die vorzugsweise identisch ausgebildet sind. Eine derartige Messerplatte ist dadurch gekennzeichnet, daß sie bei Verschleiß einer Schneidkante um 180° um eine Achse drehbar ist, die senkrecht auf der Mittelachse steht, so daß eine weitere Schneidkante für die Feinbearbeitung von Bohrungsoberflächen zur Verfügung steht.

Bevorzugt wird auch ein Ausführungsbeispiel der Messerplatte, das sich dadurch auszeichnet, daß die Spannfläche der Messerplatte so ausgerichtet ist, daß diese beim Festspannen mittels der Spannpratze die Erzeugung von Spannkräften ermöglicht, von denen eine Komponente entgegen der Fliehkraft wirkt, und einen sicheren Halt der Messerplatte im Grundkörper des Werkzeugs gewährleistet.

Bevorzugt wird weiterhin ein Ausführungsbeispiel der Messerplatte, die sich dadurch auszeichnet, daß die Spannfläche gegenüber einer gedachten Mittelebene der Messerplatte in zwei Richtungen geneigt angeordnet ist. Durch diese spezielle Anordnung der Spannfläche ist sichergestellt, daß einerseits die üblichen Spannkräfte aufgebaut werden, die die Messerplatte im Grundkörper des Werkzeugs verankern und gegen ein Widerlager drücken, welches die bei der Bearbeitung von Bohrungsoberflächen auftretenden Schneidkräfte aufnimmt. Andererseits ist durch die Neigung der Spannfläche in die zweite Richtung sichergestellt, daß -wie gesagt- Spannkräfte aufgebaut werden, die die Messerplatte in Richtung der Drehachse des Werkzeugs drängen und damit den Fliehkräften entgegenwirken. Auf diese Weise läßt sich ohne besonderen konstruktiven Aufwand sicherstellen, daß auch bei hohen Drehzahlen die Messerplatte gegen Verlagerungen gesichert ist.

Besonders bevorzugt wird ein Ausführungsbeispiel der Messerplatte, die sich dadurch auszeichnet, daß die Messerplatte als Wendeplatte ausgebildet ist, bei der die Spannfläche zwei Spannflächenbereiche aufweist, die gegenüber der gedachten Mittelebene der Messerplatte in zwei Richtungen geneigt angeordnet sind. Die beiden Spannflächenbereiche schneiden sich in einer Schnittlinie, die einen Winkel mit einer gedachten Mittellinie der Messerplatte einschließt. Auch bei einer Drehung um eine senkrecht auf einer Vorderseite der Messerplatte stehenden Achse um 180° wird sichergestellt, daß eine derartige Messerplatte sowohl gegen ein Widerlager angepreßt als auch mit Spannkräften beaufschlagt wird, die in Richtung auf die Drehachse des Werkzeugs gerichtet sind und die Messerplatte gegen Verlagerungen bei hohen Fliehkräften sichern.

Weiterhin wird ein Ausführungsbeispiel der Messerplatte vorgeschlagen, die sich dadurch auszeichnet, daß die Spannfläche im Bereich einer Schmalseite der Messerplatte angeordnet ist. Diese Spannfläche wirkt mit einem Widerlager zusammen, das so geneigt ist, daß bei einem Festspannen der Messerplatte Spannkräfte aufgebaut werden, die der Fliehkraft entgegenwirken und die Messerplatte auch bei hohen Drehzahlen sicher halten.

Weitere Ausgestaltungen ergeben sich aus den übrigen Unteransprüchen.

Zur Lösung der Aufgabe wird auch ein Werkzeug vorgeschlagen, das die in Anspruch 15 genannten Merkmale aufweist.

Die Erfindung wird im folgenden anhand der Zeichnung näher erläutert. Es zeigen:
- Figur 1: eine perspektivische Ansicht eines Werkzeugs mit einer Messerplatte,
- Figur 2: eine perspektivische Ansicht einer Messerplatte,
- Figur 3: eine Draufsicht auf die Stirnseite einer Messerplatte,
- Figur 4: eine Seitenansicht eines ausschnittsweise dargestellten Werkzeugs,
- Figur 5: ein erstes Ausführungsbeispiel einer Messerplätte des Werkzeugs gemäß Figur 4,
- Figur 6: eine Teildarstellung des Werkszeugs gemäß Figur 4,
- Figur 7: die von einer Spannpratze gehaltene Messerplatte, und
- Figuren 8 und 9: weitere Ausführungsbeispiele der Messerplatte.

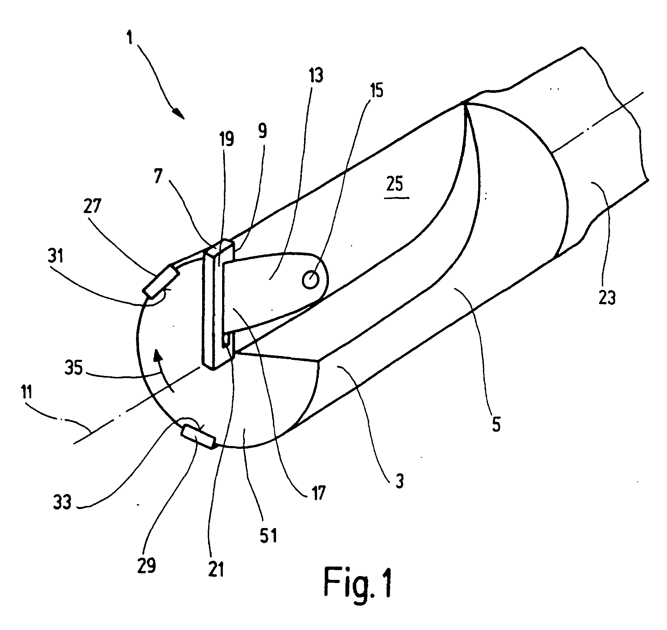

Das in Figur 1 dargestellte Werkzeug 1 dient der Feinbearbeitung einer Bohrungsoberfläche in einem Werkstück. Es wird im Betrieb in Rotation versetzt und in die zu bearbeitende Bohrung eingeführt.

Das Werkzeug 1 weist einen Grundkörper 3 auf, in dessen Umfangsfläche 5 mindestens eine Messerplatte 7 eingesetzt ist. Dazu wird in die Umfangsfläche 5 eine die Messerplatte aufnehmende Nut 9 eingebracht, die senkrecht zur Drehachse 11 des Werkzeugs 1 verläuft. Die Messerplatte 7 wird von einer Spannpratze 13 gehalten, die mittels einer hier lediglich angedeuteten Spannschraube 15 im Grundkörper 3 des Werkzeugs 1 befestigt ist. Die Prinzipskizze gemäß Figur 1 läßt erkennen, daß die Spannpratze 13 mit einer Spannlippe 17 auf die Vorderseite beziehungsweise Messerbrust 19 der Messerplatte 7 wirkt. Die Spannlippe 17 liegt auf einer Spannfläche 21 auf, die in die Messerbrust 19 eingebracht ist.

Der Grundkörper 3 des Werkzeugs 1 ist kreiszylindrisch ausgebildet und über einen hier abgebrochen dargestellten Schaft 23 mit einem Antrieb beziehungsweise einer hier nicht dargestellten Werkzeugmaschine verbunden.

In die Umfangsfläche 5 des Grundkörpers 3 ist eine Ausnehmung beziehungsweise Abflachung eingebracht, die einen Spanabfuhrraum 25 bildet.

Rein beispielhaft ist bei dem in Figur 1 dargestellten Werkzeug vorgesehen, daß zwei Führungsleisten 27 und 29 in die Umfangsfläche 5 des Grundkörpers 3 eingebracht sind, die als langgestreckte, im wesentlichen parallel zur Drehachse 11 verlaufende Metallstreifen ausgebildet sind, die in geeignete Nuten 31 und 33 eingebracht und dort befestigt sind. Die erste Führungsleiste 27 eilt der Messerplatte 7 in der durch ein Pfeil 35 angedeuteten Drehrichtung gesehen, um ca. 40° vor, während die zweite Führungsleiste 29 der Messerplatte 7 diametral gegenüberliegend angeordnet ist.

Aus der Prinzipskizze in Figur 1 ist ersichtlich, daß die Vorderkante der Spannlippe 17 nicht genau senkrecht zur Drehachse 11 verläuft, sondern mehr oder weniger in Richtung der Diagonalen der Messerplatte 7, die hier rechteckig ausgebildet ist. Wesentlich ist, daß die Vorderkante der Spannlippe 17 einen spitzen Winkel mit einer gedachten, senkrecht auf der Drehachse 11 stehenden Geraden beziehungsweise mit einer Parallelen dazu einschließt.

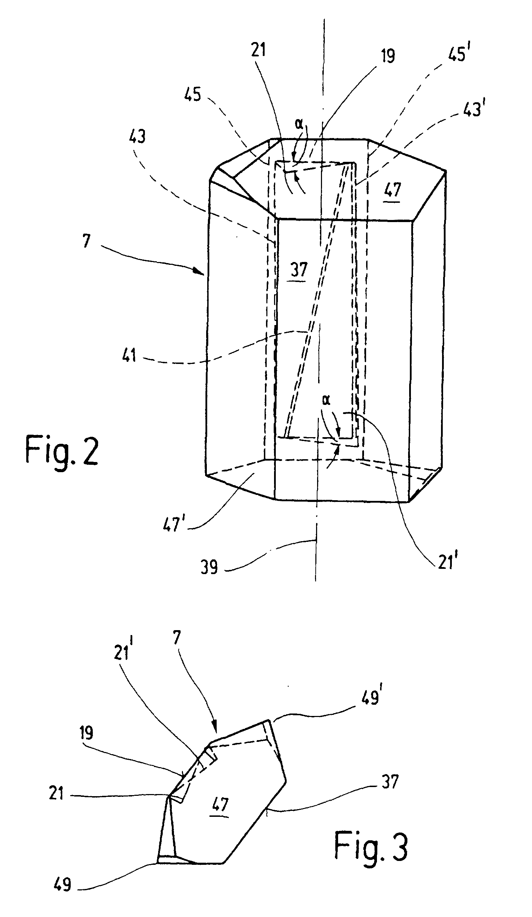

Figur 2 zeigt eine perspektivische Ansicht der Messerplatte 7 in Vergrößerung. In der Ansicht ist die der Messerbrust 19 gegenüberliegende Rückseite 37 der Messerplatte 7 sichtbar. Die Rückseite 37 verläuft parallel zur Messerbrust 19. Deutlich ist erkennbar, daß in die Messerbrust 19 zwei Spannflächen 21 und 21' eingebracht sind, auf denen eine Spannlippe einer hier nicht dargestellten Spannpratze ruht, wenn die Messerplatte 7 im Grundkörper eines Werkzeugs verspannt wird. Es zeigt sich auch, daß die Spannflächen ausgehend von der Messerbrust 19 unter einem spitzen Winkel α zu der Ebene abfallen, in der die Messerbrust 19 liegt.

Figur 2 läßt deutlich erkennen, daß die Grenze zwischen den beiden Spannflächen 21 und 21' mit einer gedachten Mittellängsachse 39 der Messerplatte einen spitzen Winkel einschließt. Da der Neigungswinkel α der Spannfläche 21 entgegengesetzt orientiert ist wie der Neigungswinkel α' der Spannfläche 21', ergeben sich zwei gegenläufig abfallende Spannflächen, die zueinander verschränkt liegen und die durch eine im wesentlichen diagonal über die Messerbrust laufende Begrenzungslinie 41 voneinander getrennt werden.

Figur 2 zeigt auch deutlich, daß eine Begrenzungskante 43 der Spannfläche 21 sowie eine Begrenzungskante 43' der Spannfläche 21' parallel zu der Mittelachse 39 aber auch zu hier gestrichelt eingezeichneten Seitenkanten 45 und 45' verlaufen, wobei hier die Seitenkanten mit den Längskanten der Messerplatte zusammenfallen beziehungsweise diese bilden.

Die Länge der Spannflächen 21 und 21' ist etwas kleiner als die Gesamtlänge der Messerplatte. Sie sind so angeordnet, daß sie in einem Abstand zu den Stirnseiten 47 und 47' enden. Eine Spannlippe, die auf einer Spannfläche 21 oder 21' aufliegt, ist also seitlich gegen Eindringen von Spänen oder sonstigen Verunreinigungen geschützt.

Die Spannflächen 21 und 21' sind -in Draufsicht auf die Messerbrust 19 gesehen- im wesentlichen dreieckförmig ausgebildet, wobei sie ein rechtwinkliges Dreieck bilden und wobei deren Hypotenuse etwa mit der Begrenzungslinie 41 zusammenfällt und wobei die längere Kathete die Begrenzungskante 43 beziehungsweise 43' bildet. Die kürzere Kathete verläuft parallel zu den Stirnseiten 47. Die Neigung der Spannflächen 21 und 21' ist so gewählt, daß der in Richtung der Mittelachse 39 gesehene tiefste Teil der Spannfläche nahe der Stirnseite 47 beziehungsweise 47' angeordnet ist.

Figur 3 zeigt eine Draufsicht auf die Stirnseite 47 der Messerplatte 7, aus der ersichtlich ist, daß die Messerbrust 19 und die Rückseite 37 parallel zueinander verlaufen und daß die an die Messerbrust 19 und an die Rückseite anschließenden Seitenflächen der Messerplatte deren Schneidkanten 49 und 49' ausbilden. Messerplatten der hier angesprochenen Art sind grundsätzlich bekannt, so daß hier nicht näher darauf eingegangen werden soll.

Die Darstellung in Figur 3 läßt erkennen, daß die Spannflächen 21 und 21' unter einem gleichen Winkel gegenüber der Ebene abfallen, in der die Messerbrust 19 liegt, daß aber die Spannflächen in entgegengesetzter Richtung zueinander abfallen. Daher werden diese Spannflächen auch als zueinander verschränkt bezeichnet.

Für die Funktion der Spannflächen 21 und 21' ist es letztlich belanglos, ob diese bis an die Stirnflächen 47, 47' der Messerplatte 7 heranreichen oder nicht. Es ist jedoch -aus Gründen des Schutzes vor Verschmutzungen- vorzuziehen, die Länge der Spannflächen kürzer zu wählen als die Gesamtlänge der Messerplatte.

Im Zusammenhang mit Figur 1 soll auf die spezielle Ausgestaltung der Messerplatte 7 beziehungsweise deren Spannflächen 21 und 21' noch einmal näher eingegangen werden:

Die hier beispielhaft als Wendeplatte ausgebildete Messerplatte 7 ist, wie gesagt in einer Nut 9 angeordnet, deren Länge auf die Länge der Messerplatte abgestimmt ist. Die Messerplatte liegt daher mit ihrer der Vorderseite 51 des Werkzeugs 1 abgewandten Stirnseite am Grund der Nut 9 an. Gleichzeitig liegt die der Drehachse 11 zugewandte Stirnseite der Messerplatte am Nutende an. Durch die unter einem Winkel zur gedachten Mittellängsachse 39 verlaufende Spannfläche 21 beziehungsweise 21' wird -nach Art eines Keilgetriebes- die Messerplatte aufgrund der Spannwirkung der Spannlippe 17 beziehungsweise Spannpratze 13 einerseits gegen das radial innenliegende Ende der Nut 9 angepreßt, andererseits gegen den der Stirnseite 51 abgewandten Grund der Nut.

Aus dem hier Gesagten wird ohne weiteres deutlich, daß aufgrund dieser Doppelwirkung der Spannpratze die Messerplatte 7 besonders sicher im Grundkörper 3 des Werkzeugs 1 gehalten wird. Dies ist im übrigen auch dann der Fall, wenn die gedachte Mittellängsachse 39 der Messerplatte 7 bei einem Werkzeug 1 parallel zu der Drehachse 11 verläuft und die Messerplatte bei einer hohen Drehzahl des Werkzeugs mit nach außen, senkrecht zur Drehachse 11 gerichteten Kräften beaufschlagt wird. Es zeigt sich also, daß die Spannflächen der Messerplatte auch bei einer um 90° versetzten Anordnung der Messerplatte im Grundkörper 3 des Werkzeugs 1 immer unter einem Winkel zu den senkrecht zur Drehachse wirkenden Fliehkräften angeordnet sind, so daß ein sicherer Halt der Messerplatte 7 in der Nut 9 gegeben ist.

Ohne weiteres erkennbar ist, daß für die sichere Verspannung der Messerplatte 7 im Grundkörper 3 eines Werkzeugs 1 der schräge Verlauf der Spannfläche zur Drehachse 11 entscheidend ist, um ein versehentliches Lösen der Messerplatte bei hohen Rotationsgeschwindigkeiten des Werkzeugs 1 zu vermeiden.

Für die sichere Verspannung der Messerplatte in einem Werkzeug kommt es letztlich auf die Grundform der Messerplatte und auf die Anzahl der Spannflächen nicht an. Es können also auch andere -beispielsweise sechseckige- Messerplatten als rechteckige Wendeplatten eingesetzt werden, sofern der Grundgedanke der schrägen Anordnung der Spannflächen gegenüber der Drehachse 11 gewahrt ist. Es ist daher selbstverständlich auch möglich, mehr als eine Messerplatte in den Grundkörper eines Werkzeugs einzubringen und dabei eine Orientierung der Messerplatte vorzusehen, bei der deren gedachte Mittelachse 39 im wesentlichen parallel zur Drehachse 11 oder im wesentlichen senkrecht zu dieser verläuft. In beiden Montagestellungen ist aufgrund der unter einem Winkel zur Drehachse 11 verlaufenden Spannfläche gewährleistet, daß ein ungewolltes Lösen der Messerplatte mit hoher Sicherheit vermieden wird. Es wird noch einmal ausdrücklich darauf hingewiesen, daß sehr wohl Messerplatten mit nur einer Spannfläche dieselben Vorteile zeigen, wie Wendeplatten mit zwei Spannflächen.

Die hier beschriebene Messerplatte wird vorzugsweise in einem Sinterverfahren hergestellt. Es ist jedoch auch möglich, die in der Messerbrust vorhandenen Spannflächen in einem Erosionsverfahren zu erzeugen.

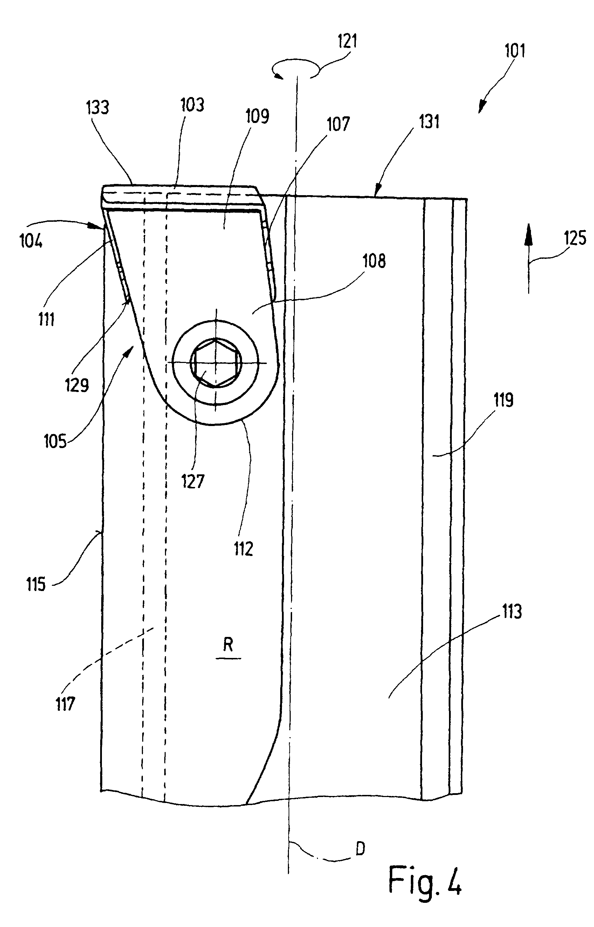

Figur 4 zeigt einen Abschnitt eines zylinderförmigen Werkzeugs 101, nämlich das Vorderteil des Werkzeugs 101, in das hier eine Messerplatte 103 derart eingesetzt ist, daß ihre Längskanten horizontal und damit im wesentlichen senkrecht zu einer mit der Mittellängsachse zusammenfallenden Drehachse D des Werkzeugs 101 verlaufen. Die Messerplatte 103 ist in einer in dem Werkzeug 101 eingebrachten Nut 104 angeordnet, die -beziehungsweise deren Längsachsein radialer Richtung zur Drehachse D des Werkzeugs 101 verläuft. Sie wird von einer Spannpratze 105 gehalten, die auf der Vorderseite beziehungsweise Messerbrust 107 der Messerplatte 103 mit einer Spannlippe 109 aufliegt. Die Messerplatte 103 weist eine mit der Spannlippe 109 zusammenwirkende Spannfläche 111 auf. Die der Messerbrust 107 abgewandte Oberfläche 108 der Spannpratze 105 schließt vorzugsweise plan mit einer Begrenzungsfläche eines Spanraums R ab. Dazu ist die Spannpratze 105 in einer in das Werkzeug 101 eingebrachten Ausnehmung 112 versenkt angeordnet, deren Konturen an die äußere Form der Spannpratze 105 so angepaßt sind, daß diese formschlüssig im Werkzeug 101 gehalten wird.

Die Messerplatte 103 ist so in den Grundkörper 113 des Werkzeugs 101 eingesetzt, daß sie die radiale Umfangsfläche 115 überragt.

In die Umfangsfläche 115 sind hier zwei Führungsleisten 117 und 119 eingesetzt, von denen die erste Führungsleiste 117 der Messerplatte 103 -in der durch einen Pfeil 121 angedeuteten Drehrichtung des Werkzeugs 101 gesehen- um circa 40° nacheilt. Die zweite Führungsleiste 119 ist der Messerplatte 103 diametral gegenüberliegend in die Umfangsfläche 115 eingesetzt.

Der Grundaufbau einer Reibahle beziehungsweise des Werkzeugs 101 ist bekannt, so daß hier nicht näher darauf eingegangen wird. Zur Funktion des Werkzeugs 101 sei hier noch folgendes festgehalten: Das Werkzeug wird in eine geeignete Halterung, beispielsweise in eine Werkzeugspindel eingesetzt und mit hoher Drehzahl in Rotation versetzt. Dann wird es in eine Bohrung eingeführt, deren Oberfläche zu bearbeiten ist. Die Bohrungsoberfläche wird von dem Werkzeug 101 beziehungsweise von der die Umfangsfläche 115 überragenden Messerplatte 103 bearbeitet, indem Späne abgetragen werden. Das Werkzeug 101 stützt sich mittels der Führungsleisten 117 und 119 an der Bohrungsoberfläche ab, wobei die Führungsleisten dabei auch die Oberfläche glätten. Die von der Messerplatte 103 abgetragenen Späne werden über den Spanraum R ausgetragen, der durch eine Ausnehmung in der Umfangsfläche 115 gebildet wird. Die Späne können auch durch ein Kühl- und Schmiermittel ausgetragen werden. Die Vorschubbewegung des Werkzeugs 101 ist durch einen Doppelpfeil 125 angedeutet.

Die Messerplatte 103 wird von der Spannpratze 105 sicher im Grundkörper 113 des Werkzeugs 101 gehalten. Zur Verankerung der Spannpratze 105 wird eine Spannschraube 127 eingesetzt. Es ist auch möglich, mehrere Spannpratzen zu verwenden, insbesondere, wenn die in radialer Richtung gemessene Länge der Messerplatte größer ist.

Die zur Verankerung der Messerplatte 103 erforderlichen Haltekräfte werden dadurch erzeugt, daß die Messerplatte 103 mit ihrer der Messerbrust 107 gegenüberliegenden Rückseite gegen eine Anlagefläche des Werkzeugs 101 gepreßt wird, wobei Reibungskräfte wirken. Die bei der Bearbeitung einer Bohrungsoberfläche wirkenden Schnittkräfte werden von einem Widerlager 129 aufgefangen, auf dem die Messerplatte 103 mit ihrer einer Stirnseite 131 des Werkzeugs 101 abgewandten Seitenkante aufliegt. Die in Vorschubrichtung gesehene vordere Seitenkante 133 bildet die aktive Schneidkante der Messerplatte 103. Die aktive Schneidkante steht über die Stirnseite 131 hervor, um die Grundfläche von Grundbohrungen bearbeiten zu können.

Die bei den hohen Umdrehungsgeschwindigkeiten auftretenden Fliehkräfte, die zu einer Lockerung der Messerplatte 103 führen könnten, werden dadurch abgefangen, daß die Spannfläche 111 so ausgerichtet ist, daß beim Festspannen der Messerplatte 103 mittels der Spannpratze 105 Spannkräfte aufgebaut werden, von denen eine Komponente entgegen der Fliehkraft, also senkrecht zur Drehachse D wirkt, so daß die Messerplatte 103 in Richtung zur Drehachse D gedrängt wird.

In Figur 4 ist ein Werkzeug 101 mit einer Messerplatte 103 dargestellt, welche als Wendeplatte ausgebildet ist.

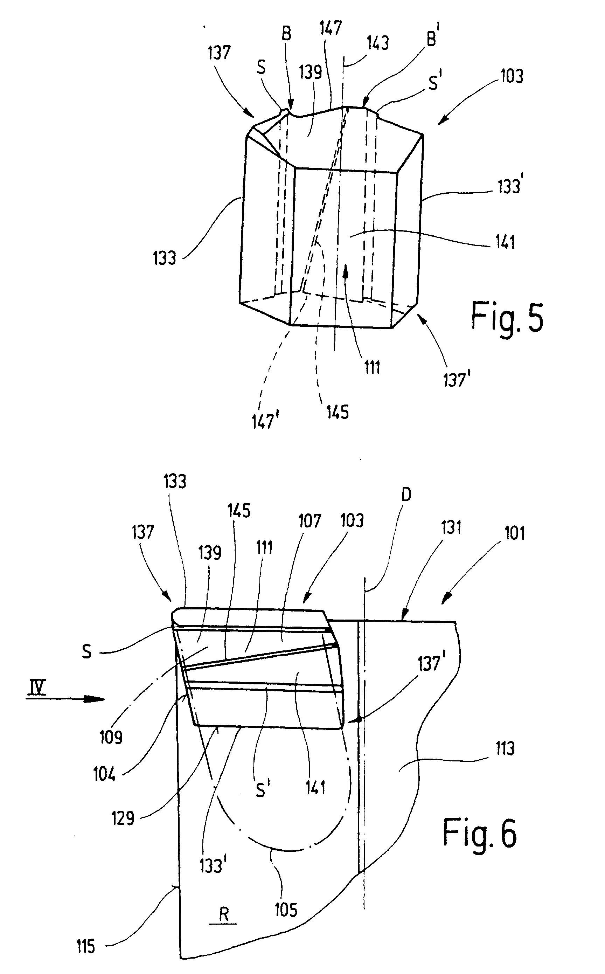

Verschiedene Ausgestaltungsmöglichkeiten des Werkzeugs beziehungsweise der Messerplatte sind in den Figuren 5, 8 und 9 dargestellt.

Figur 5 zeigt in perspektivischer Darstellung eine Messerplatte 103, wie sie bei dem Werkzeug 101 in Figur 4 eingesetzt ist und die als Wendeplatte ausgebildet ist. Bei der Darstellung gemäß Figur 5 wird davon ausgegangen, daß bei der vorzugsweise als gerades Prisma mit einer im wesentlichen sechseckigen Grundfläche ausgebildeten Messerplatte 103 oben links die aktive Schneide 137 ist, die eine Haupt- und eine Nebenschneide aufweist, wie dies bei herkömmlichen Werkzeugen ebenfalls der Fall ist. Es wird daher hier nicht näher darauf eingegangen.

Im Bereich der Messerbrust 107 -die in Figur 5 vom Betrachter abgewandt ist- ist hier die Spannfläche 111 erkennbar, die zwei Spannflächenbereiche 139 und 141 aufweist.

Es ist bekannt, Messerplatten mit zwei Spannflächenbereichen auszustatten, nämlich dann, wenn diese als Wendeplatte ausgebildet ist. Die Spannfläche wird bei diesen bekannten Messerplatten als V-förmige Nut ausgebildet, wobei die beiden zu den Längs- beziehungsweise Seitenkanten parallel verlaufenden Spannflächenbereiche jeweils von den Seitenkanten aus gesehen zur gedachten Mittelachse der Messerplatte hin abfallen, so daß in diesem Fall die Schnittlinie der beiden Spannflächenbereiche der tiefste Bereich der Spannfläche ist. Die Schnittlinie verläuft im übrigen parallel zu der Mittellängsachse der Messerplatte. Bei den bekannten Messerplatten schneiden sich also die Spannflächenbereiche in einer Schnittlinie, die parallel zur Mittellängsachse verläuft.

Bei dem hier dargestellten Werkzeug 101 beziehungsweise der Messerplatte 103 verläuft die Schnittlinie 145, die durch die beiden sich schneidenden Spannflächenbereiche 139 und 141 gebildet wird, unter einem Winkel zu der Mittellängsachse 143. Hier verläuft die Schnittlinie 145 diagonal durch die Spannfläche 111.

Die hier dargestellte Messerplatte 103 zeichnet sich dadurch aus, daß im Bereich der Spannfläche 111 zwei Spannflächenbereiche 139 und 141 vorgesehen sind, die sich im Bereich der Schnittlinie 145 schneiden, die den höchsten Bereich der Spannfläche 111 bildet. Die Spannflächen 139, 141 fallen von der Schnittlinie 145 in Richtung auf die Seitenkanten 133, 133' ab. Außerdem fällt der Spannflächenbereich 139 -in Figur 5- von unten nach oben ab, während der Spannflächenbereich 141 entgegengesetzt geneigt ist, und -in Figur 5- von oben nach unten abfällt. Mit anderen Worten: Die Spannflächenbereiche 139 und 141 sind zusätzlich seitlich geneigt. Der linke Spannflächenbereich 139 fällt von der Schnittlinie 145 zur oberen Außenkante 147 hin ab. Entsprechend fällt der in Figur 5 rechte Spannflächenbereich 141 ausgehend von der Schnittlinie 145 zur unteren Außenkante 147' hin ab.

Denkt man sich eine parallel zur Bildebene der Darstellung gemäß Figur 5 verlaufende Mittelebene der Messerplatte 103, so fallen die Spannflächenbereiche 139 und 141 gegenüber dieser Mittelebene in zwei Richtungen ab beziehungsweise sie sind in zwei Richtungen gegenüber der Mittelebene geneigt: Sie steigen also einerseits zur gedachten Mittelachse 143 beziehungsweise zur Schnittlinie 145 hin an, andererseits fällt der linke Spannflächenbereich 139 von unten nach oben ab, während der rechte Spannflächenbereich 141 von oben nach unten abfällt. Das heißt, daß sich -in Draufsicht gesehendie Tiefe der Spannflächenbereiche 139 und 141 -in Längserstreckung der Messerplatte 103 gesehen ändert.

Greift nun die Spannlippe 109 einer Spannpratze 105 auf dem linken Spannflächenbereich 139 der Spannfläche 111 an, so entsteht eine Kraftkomponente, die in Richtung der Seitenkante 133' wirkt, mit der die Messerplatte 103, wie in Figur 4 dargestellt, auf dem Widerlager 129 aufliegt. Die Messerplatte 103 wird also gegen das Widerlager 129 angepreßt. Gleichzeitig entsteht durch den Abfall des Spannflächenbereichs 139 von der Schnittlinie 145 zur Außenkante 147 eine Kraftkomponente, die -in Figur 5- nach unten wirkt. Diese Kraftkomponente wirkt bei der Darstellung gemäß Figur 4 in Richtung der Drehachse D und stellt sicher, daß die Messerplatte 103 auch bei hohen Drehzahlen nicht radial nach außen verschoben wird.

Der -in Figur 5- linke Spannflächenbereich 139 verbreitert sich -von der Seitenkante 133 aus gesehenzur Schnittlinie 145, entsprechend verschmälert sich der rechte Spannflächenbereich 141 -von der Seitenkante 133' aus gesehen- in Richtung zur Schnittlinie 145. Es wird deutlich, daß die Spannfläche nicht bis an die Seitenkanten 133 beziehungsweise 133' reicht. Unmittelbar an die Seitenkanten schließen sich Spanflächen S und S' an, auf denen die von den Schneidkanten 137 und 137' abgetragenen Späne entlang gleiten.

Bei dem hier dargestellten Ausführungsbeispiel ist im Bereich der Schnittlinie 145 ein schmaler horizontaler Streifen vorgesehen, der die Spannflächenbereiche 139 und 141 trennt. Es ist auch möglich, im Bereich der linken und rechten Begrenzungskante B beziehungsweise B' jeweils einen derartigen Streifen vorzusehen, dessen Oberfläche parallel oder geneigt zur Bildebene von Figur 5 beziehungsweise zu einer gedachten Mittelebene der Messerplatte 103 verläuft.

In Figur 6 ist ausschnittweise das in Figur 4 wiedergegebene Werkzeug 101 dargestellt, wobei die Führungsleisten 117 und 119 der besseren Übersichtlichkeit wegen nicht gezeigt sind. Im übrigen sind gleiche Teile wie in Figur 4 mit denselben Bezugszeichen versehen, insofern wird auf deren Beschreibung verwiesen. Überdies ist die Spannpratze 105 lediglich durch eine strichpunktierte Linie dargestellt, wobei die Spannschraube 127 weggelassen ist. In Figur 6 wird deutlich, daß die Messerplatte 103 derart in den Grundkörper 113 eingebracht ist, daß ihre Schneidkante 137 über die radial verlaufende Umfangsfläche 115 hervorsteht. Die Spannfläche 111 ist -entgegen der Darstellung gemäß Figur 5- dem Betrachter zugewandt. Die Spannflächenbereiche 139 und 141 sind also der Spannpratze 105 zugewandt, wobei die Spannlippe 109 der Spannpratze 105 lediglich den Spannflächenbereich 139 mit einer Kraft beaufschlagt. Dadurch, daß der Spannflächenbereich 139 -in Figur 6- von rechts nach links abfällt, entsteht durch die Kraftbeaufschlagung durch die Spannpratze beziehungsweise Spannlippe eine Kraftkomponente, die -in Figur 6- die Messerplatte 103 in Richtung der Drehachse D, also radial nach innen, drängt.

Ohne weiteres ist in Figur 6 erkennbar, daß bei einer Drehung der Messerplatte 103 mit der aktiven Schneidkante 137 die Oberfläche einer Bohrung bearbeitet werden kann. Der Spannflächenbereich 141 wird -in der in Figur 6 gezeigten Stellung der Messerplatte 103- von der Spannpratze 105 nicht berührt.

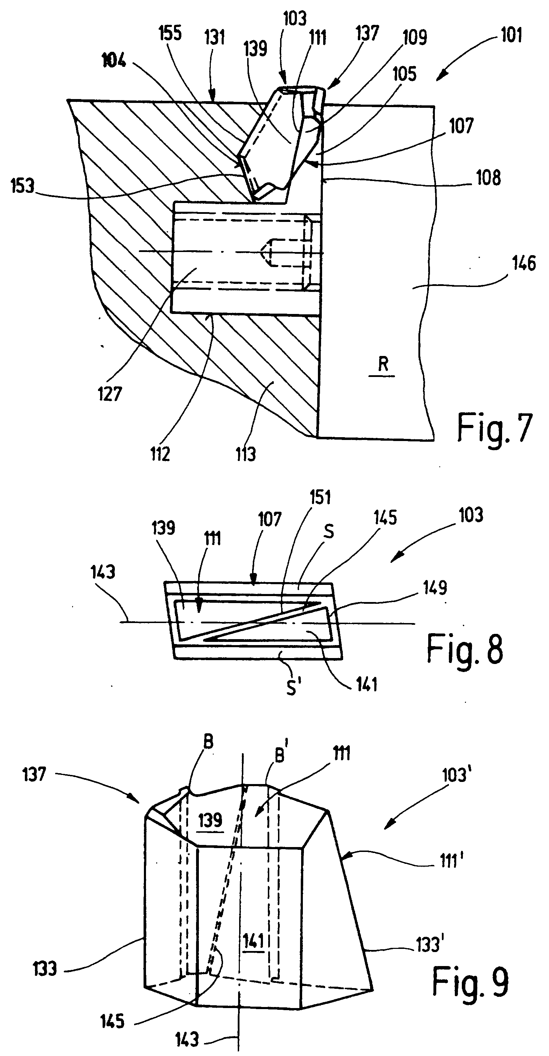

In Figur 7 ist das Werkzeug 101 ausschnittweise dargestellt, wie es sich aus einer Blickrichtung gemäß Pfeil IV in Figur 6 ergibt. Der Grundkörper 113 des Werkzeugs 101 ist geschnitten dargestellt. Im übrigen sind gleiche Teile wie in den Figuren 4 bis 6 mit denselben Bezugszeichen versehen, so daß auf deren Beschreibung verwiesen werden kann.

In Figur 7 ist die Spannpratze 105 dargestellt, die in der Ausnehmung 112 des Grundkörpers 113 derart angeordnet ist, daß ihre Oberfläche 108 mit einer Fläche 146 des Spanraums R zusammenfällt. Die Spannpratze 105, die auf die Messerplatte 103 eine Kraft ausübt, wird durch die Spannschraube 127 im Grundkörper 113 des Werkzeugs 101 verankert, wobei die Gewindebohrung im Grundkörper 113 nicht dargestellt ist. Die Spannlippe 109 der Spannpratze 105 ist derart ausgebildet, daß ihre der Spannfläche 111 der Messerplatte 103 zugewandte Seite in die Kontur des Spannflächenbereichs 139 beziehungsweise 141 paßt. Ferner ist die Nut 104 dargestellt, die die Messerplatte 103 aufnimmt. Die Nut 104 ist dabei so ausgebildet, daß sie die Messerplatte 103, die als im wesentlichen gerades Prisma mit einer im wesentlichen sechseckigen Grundfläche (Figur 5) ausgebildet ist, aufnimmt. Das heißt, daß die Nut 104 ein Widerlager für seitliche Begrenzungsflächen 153 und 155 der Messerplatte 103 darstellt.

Figur 8 zeigt ein abgewandeltes Ausführungsbeispiel eines Werkzeugs 101 beziehungsweise einer hier schematisch dargestellten Messerbrust 107 einer Messerplatte 103, die sich dadurch auszeichnet, daß die Spannfläche 111 rundum von einer Begrenzungsfläche 149 umgeben ist, die im wesentlichen parallel zur Darstellungsebene in Figur 8 verläuft. Die Spannflächenbereiche 139 und 141 werden auch hier von der Schnittlinie 145 getrennt, die hier ebenfalls einen ebenen Streifen 151 bildet. Bei dem hier dargestellten Ausführungsbeispiel sind die Begrenzungsflächen 149 und der Streifen 151 in einer Ebene angeordnet.

Wesentlich ist, daß die Spannflächenbereiche 139 und 141 rundum abgeschlossen sind, so daß eine auf den Spannflächenbereichen aufliegende Spannlippe 109 einer Spannpratze 105 geschützt aufliegt und Späne nicht unter die Spannlippe 109 gelangen können. Dadurch findet die Messerplatte 103 sicheren Halt.

Im übrigen sind gleiche Teile der in Figur 8 dargestellten Messerplatte, die mit denen in den übrigen Figuren 4 bis 7 übereinstimmen, mit gleichen Bezugsziffern versehen, so daß insofern auf deren Beschreibung verwiesen wird.

Die in Figur 9 dargestellte Messerplatte 103' ist insofern abgewandelt, als eine Spannfläche 111' vorgesehen ist, die gegenüber der gedachten Mittellängsachse 143 der Messerplatte 103' unter einem spitzen Winkel verläuft, wobei der Abstand der rechten Seitenkante 133' zur Mittellängsachse 143 von oben nach unten zunimmt. Bei einer derartigen Messerplatte 103 ist das Widerlager 129 (Figur 4) entsprechend geneigt. Dies führt dazu, daß beim Festspannen der Messerplatte 103' mittels einer Spannpratze 105 allein aufgrund der Ausgestaltung der Spannfläche 111' Spannkräfte aufgebaut werden, die zumindest eine Kraftkomponente aufweisen, die in Figur 9 von oben nach unten wirken und die Messerplatte 103' zur Drehachse D des Werkzeugs 101 drängen. Die Spannfläche 111' ist also so ausgebildet, daß eine Kraftkomponente entgegen der Fliehkraft wirkt.

Bei der Messerplatte 103' gemäß Figur 9 greift eine Spannpratze 105 ebenfalls auf der Spannfläche 111 an. Die Spannfläche kann ausgehend von der linken Begrenzungskante B der Spannfläche aus ansteigen bis zur rechten Begrenzungskante B' der Spannfläche 111. Es ist aber auch denkbar, die Messerplatte 103' als Parallelogramm auszubilden und als Wendeplatte zu verwenden, wobei jeweils die linke Seitenkante 133 unter einem Winkel zur Mittelachse 143 verläuft, so daß beim Festspannen der Messerplatte Kraftkomponenten entstehen, die die Messerplatte in Richtung der Drehachse D des Werkzeugs 101 drängen. Das heißt, die Seitenkante 133 der Messerplatte 103' verläuft unter einem spitzen Winkel gegenüber der gedachten Mittelachse 143, wobei der Abstand der linken Seitenkante 133 zur Mittelachse 143 von unten nach oben zunimmt. In einem derartigen Fall, wenn also die Messerplatte als Parallelogramm ausgebildet ist, kann die Spannfläche 111 wiederum zwei Spannflächenbereiche 139 und 141 aufweisen, was durch eine gestrichelte Schnittlinie 145 angedeutet ist.

In einem derartigen Fall gibt es dann also zwei Spannflächen, die beim Festspannen der Messerplatte 103' Kraftkomponenten entstehen lassen, die der Fliehkraft entgegenwirken. Es zeigt sich also, daß eine Messerplatte 103' mit den in Figur 9 dargestellten Außenkonturen und einer Spannfläche 111' zusätzlich mit einer Spannfläche 111 versehen sein kann, wie sie oben im einzelnen beschrieben wurde.

Auch wenn die Messerplatte 103 nicht als Wendeplatte ausgebildet ist, ist es möglich, die Spannfläche 111 nicht nur von der linken Seitenkante 133 beziehungsweise von der linken Begrenzungskante B zur rechten Seitenkante 133' beziehungsweise zur rechten Begrenzungskante B' ansteigend auszubilden, sondern zusätzlich mit einer Neigung zu versehen, so daß die Spannfläche 111 von rechts nach links abfällt. Auch in diesem Fall ist also die Spannfläche 111 gegenüber einer gedachten, parallel zur Darstellungsebene in Figur 9 verlaufenden Mittelebene der Messerplatte 103' in zwei Richtungen geneigt, so daß beim Einwirken einer Spannlippe 109 auf der Spannfläche 111 zumindest eine Kraftkomponente entsteht, die entgegen der Fliehkraft wirkt. Außerdem entsteht unter der Einwirkung der von der Spannpratze 105 aufgebauten Spannkräfte im Bereich der Spannfläche 111' wenigstens eine Kraftkomponente, die entgegen der Fliehkraft wirkt. Eine derartige Ausgestaltung einer Messerplatte, wie sie in Figur 9 dargestellt ist, kann also bei doppelt geneigter Spannfläche 111 eine besonders hohe Sicherheit gegen eine Verlagerung der Messerplatte 103' innerhalb eines Werkzeugs 101 bei hohen Drehzahlen bieten.

## Patentansprüche

1. Messerplatte (7, 103) für ein Werkzeug (1) zur spanabhebenden Feinbearbeitung von Bohrunqsoberflächen in Werkstücken, wobei die Messerplatte (7, 103) in eine in die Umfangsfläche des Werkzeugs (1) eingebrachte Ausnehmung (9) eingesetzt und mittels mindestens einer Spannpratze (13) gehalten wird, die mit einer Spannlippe (17) mit wenigstens einer schräg abfallenden Spannfläche (21,21') der Messerplatte (7, 103) zusammenwirkt, **dadurch gekennzeichnet, daß** die Spannfläche (21;21') -in Draufsicht gesehen- im wesentlichen dreieckförmig ausgebildet ist, daß die Spannfläche (21;21') eine Begrenzungskante (43;43') aufweist, die im wesentlichen parallel zu einer Seitenkante (49;49') der Messerplatte (7, 103) verläuft, und daß die Spannfläche (21;21') ausgehend von der Begrenzungskante (43;43') in Richtung zur Mittellängsachse (39) der Messerplatte (7, 103) ansteigt.

2. Messerplatte nach Anspruch 1, **dadurch gekennzeichnet, daß** die Messerplatte (7) als Wendeplatte ausgebildet ist und zwei -vorzugsweise identisch ausgebildete- Spannflächen (21;21') aufweist.

3. Messerplatte nach einem der vorhergehenden Ansprüche 1 und 2, **dadurch gekennzeichnet, daß** die Länge der Spannfläche (21;21') kleiner ist als die der Messerplatte (7).

4. Messerplatte nach einem der vorhergehenden Ansprüche, **dadurch gekennzeichnet, daß** die Spannfläche (21;21') vor den Stirnseiten (47;47') der Messerplatte (7) endet.

5. Messerplatte nach einem der vorhergehenden Ansprüche, **dadurch gekennzeichnet, daß** die Spannfläche (21;21') unter einem spitzen Winkel zur Drehachse (11) des Werkzeugs (1) verläuft.

6. Messerplatte nach einem der vorhergehenden Ansprüche, **dadurch gekennzeichnet, daß** die vorzugsweise im wesentlichen rechteckig ausgebildete Messerplatte (7) eine Mittellängsachse (39) aufweist, mit der die Spannfläche (21,21') einen spitzen Winkel einschließt.

7. Messerplatte nach einem der vorhergehenden Ansprüche, **dadurch gekennzeichnet, daß** die Spannfläche (111;111') so ausgerichtet ist, daß beim Festspannen der Messerplatte (103;103') mittels der Spannpratze (105) Spannkräfte aufgebaut werden, von denen wenigstens eine Komponente entgegen der Fliehkraft wirkt.

8. Messerplatte (103) nach Anspruch 7, **dadurch gekennzeichnet, daß** die Spannfläche (111) gegenüber einer parallel zu einer Messerbrust (107) der Messerplatte (103) liegenden Mittelebene in zwei Richtungen geneigt angeordnet ist.

9. Messerplatte nach Anspruch 8, **dadurch gekennzeichnet, daß** die Messerplatte (103) als Wendeplatte ausgebildet ist und daß die Spannfläche (111) zwei Spannflächenbereiche (139,141) aufweist, die gegenüber der Mittelebene in zwei Richtungen geneigt angeordnet sind, die sich in einer Schnittlinie (145) schneiden, die einen Winkel mit einer Mittellängslinie (143) einschließt.

10. Messerplatte nach Anspruch 9, **dadurch gekennzeichnet, daß** die Schnittlinie (145) zwischen den Spannflächenbereichen (139,141) etwa diagonal zur Spannfläche (111) verläuft.

11. Messerplatte nach einem der Ansprüche 8 bis 10, **dadurch gekennzeichnet, daß** die Spannfläche (111) entlang der Längs- und/oder der Schmalseiten der Messerplatte (103) von einem Rand umgeben ist.

12. Messerplatte nach Anspruch 11, **dadurch gekennzeichnet, daß** der Rand von einer Begrenzungsfläche (149) gebildet ist.

13. Messerplatte nach einem der Ansprüche 8 bis 12, **dadurch gekennzeichnet, daß** die Spannfläche (111) auf der der Spannpratze (105) zugewandten Messerbrust (107) der Messerplatte (103) vorgesehen ist.

14. Messerplatte nach einem der vorhergehenden Ansprüche, **dadurch gekennzeichnet, daß** die Spannfläche (111') im Bereich einer Längsseite angeordnet ist.

15. Werkzeug zur spanabtragenden Feinbearbeitung von Bohrungsoberflächen in Werkstücken, **gekennzeichnet durch** mindestens eine Messerplatte nach einem der Ansprüche 1 bis 14.

## Claims

1. Cutter insert (7, 103) for a tool (1) for the fine machining by chip removal of bore surfaces in workpieces, the cutter insert (7, 103) being inserted into a recess (9) introduced into the peripheral surface of the tool (1) and being held by means of at least one clamping shoe (13) which cooperates via a clamping lip (17) with at least one obliquely falling clamping surface (21, 21') of the cutter insert (7, 103), **characterised in that** the clamping surface (21; 21') - when seen in plan view - is configured substantially triangular, **in that** the clamping surface (21; 21') has a boundary edge (43; 43') which runs substantially parallel to a side edge (49; 49') of the cutter insert (7, 103), and **in that** the clamping surface (21; 21') rises from the boundary edge (43; 43') towards the centre longitudinal axis (39) of the cutter insert (7, 103).

2. Cutter insert according to claim 1, **characterised in that** the cutter insert (7) is configured as a reversible insert and has two clamping surfaces (21; 21') which are preferably configured identical.

3. Cutter insert according to one of the preceding claims 1 and 2, **characterised in that** the length of the clamping surface (21; 21') is smaller than that of the cutter insert (7).

4. Cutter insert according to one of the preceding claims, **characterised in that** the clamping surface (21; 21') ends in front of the end faces (47; 47') of the cutter insert (7).

5. Cutter insert according to one of the preceding claims, **characterised in that** the clamping surface (21; 21') runs at an acute angle to the axis of rotation (11) of the tool (1).

6. Cutter insert according to one of the preceding claims, **characterised in that** the cutter insert (7), which is preferably configured substantially rectangular, has a centre longitudinal axis (39) with which the clamping surface (21; 21') encloses an acute angle.

7. Cutter insert according to one of the preceding claims, **characterised in that** the clamping surface (111; 111') is so aligned that, when the cutter insert (103; 103') is clamped tightly by means of the clamping shoe (105), clamping forces are built up, at least one component of which acts against the centrifugal force.

8. Cutter insert (103) according to claim 7, **characterised in that** the clamping surface (111) is disposed inclined in two directions with respect to a centre plane which lies parallel to a cutter breast (107) of the cutter insert (103).

9. Cutter insert according to claim 8, **characterised in that** the cutter insert (103) is configured as a reversible insert and **in that** the clamping surface (111) has two clamping surface regions (139, 141) which are disposed with respect to the centre plane inclined in two directions which intersect in an intersection line (145) which encloses an angle with a centre longitudinal line (143).

10. Cutter insert according to claim 9, **characterised in that** the intersection line (145) between the clamping surface regions (139, 141) runs roughly diagonally with respect to the clamping surface (111).

11. Cutter insert according to one of claims 8 to 10, **characterised in that** the clamping surface (111) along the longitudinal and/or narrow sides of the cutter insert (103) is surrounded by an edge.

12. Cutter insert according to claim 11, **characterised in that** the edge is formed by a boundary surface (149).

13. Cutter insert according to one of claims 8 to 12, **characterised in that** the clamping surface (111) is provided on the cutter breast (107), facing the clamping shoe (105), of the cutter insert (103).

14. Cutter insert according to one of the preceding claims, **characterised in that** the clamping surface (111') is arranged in the region of a longitudinal side.

15. Tool for the fine machining by chip removal of bore surfaces in workpieces, **characterised by** at least one cutter insert according to one of claims 1 to 14.

## Revendications

1. Plaquette de coupe (7, 103) pour montage sur un outil (1) d'usinage fin par enlèvement de copeaux, de surfaces d'alésages percés dans des pièces, la plaquette (7, 103) étant placée dans un évidement (9) pratiqué à la surface de l'outil (1) et maintenue par au moins une griffe de serrage (13) qui coopère par une lèvre de serrage (17) avec au moins une portée de serrage inclinée (21, 21') de la plaquette (7, 103),
**caractérisée en ce que**
la portée de serrage (21, 21'), vue en plan, a essentiellement la forme d'un triangle, délimité par un bord (43, 43') essentiellement parallèle à un bord latéral (49, 49') de la plaquette (7, 103), et la portée de serrage (21, 21') en partant du bord (43, 43') est en pente montante en direction de l'axe longitudinal médian (39) de la plaquette (7, 103).

2. Plaquette selon la revendication 1,
**caractérisée en ce que**
la plaquette (7) est du type réversible et présente deux portées de serrage (21, 21') de préférence identiques.

3. Plaquette selon l'une quelconque des revendications 1 ou 2,
**caractérisée en ce que**
la longueur de la portée de serrage (21, 21') est inférieure à celle de la plaquette (7).

4. Plaquette selon l'une quelconque des revendications précédentes,
**caractérisée en ce que**
la portée de serrage (21, 21') se termine avant les faces frontales (47, 47') de la plaquette (7).

5. Plaquette selon l'une quelconque des revendications précédentes,
**caractérisée en ce que**
la portée de serrage (21, 21') fait un angle aigu avec l'axe de rotation (11) de l'outil (1).

6. Plaquette selon l'une quelconque des revendications précédentes,
**caractérisée en ce que**
la plaquette de coupe (7), qui est de préférence essentiellement rectangulaire présente un axe longitudinal médian (39) avec lequel la portée de serrage (21, 21') fait un angle aigu.

7. Plaquette selon l'une quelconque des revendications précédentes,
**caractérisée en ce que**
la portée de serrage (111, 111') est dirigée de manière à créer, lorsqu'on sert la plaquette de coupe (103, 103') au moyen de la griffe de serrage (105), des forces de serrage présentant au moins une composante s'opposant à la force centrifuge.

8. Plaquette de coupe (103) selon la revendication 7,
**caractérisée en ce que**
la portée de serrage (111) est inclinée dans deux directions, par rapport à un plan médian parallèle à une face de coupe (107) de la plaquette (103).

9. Plaquette de coupe selon la revendication 8,
**caractérisée en ce que**
la plaquette de coupe (103) est réversible et la portée de serrage (111) présente deux zones (139, 141) qui, par rapport au plan médian, sont inclinées dans deux directions et se coupent selon une ligne (145) faisant un angle avec une ligne longitudinale médiane (143).

10. Plaquette de coupe selon la revendication 9,
**caractérisée en ce que**
la ligne de coupe (145) séparant les zones (139, 141) est disposée à peu près en diagonale par rapport à la portée de serrage (111).

11. Plaquette de coupe selon l'une quelconque des revendications 8 à 10,
**caractérisée en ce que**
la portée de serrage (111) est entourée par un bord le long des côtés longs et/ou des côtés courts de la plaquette (103).

12. Plaquette de coupe selon la revendication 11,
**caractérisée en ce que**
le bord est constitué par une surface marginale (149).

13. Plaquette de coupe selon l'une quelconque des revendications 8 à 12,
**caractérisée en ce que**
la portée de serrage (111) est prévue sur la face de coupe (107) de la plaquette (103) en regard de la griffe de serrage (105).

14. Plaquette de coupe selon l'une quelconque des revendications précédentes,
**caractérisée en ce que**
la portée de serrage (111') est disposée dans une zone d'une face longitudinale.

15. Outil pour l'usinage fin par enlèvement de copeaux, de surfaces d'alésages percés dans des pièces,
**caractérisé en ce qu'**
il utilise au moins une plaquette de coupe selon les revendications 1 à 14.
